# EUROPÄISCHE PATENTSCHRIFT

(11) **EP 1 152 519 B1**
(45) Veröffentlichungstag und Bekanntmachung des Hinweises auf die Patenterteilung: **13.12.2006**
(21) Anmeldenummer: 01000115.4
(22) Anmeldetag: 19.04.2001
(51) Int. Cl.: H02M 3/337

(54) **DC-DC-Konverter**
DC-DC converter
Convertisseur courant continu - courant continu

(30) Priorität: 26.04.2000 DE 10020357
(43) Veröffentlichungstag der Anmeldung: 07.11.2001
(73) Patentinhaber: Philips Intellectual Property & Standards GmbH, 20099 Hamburg (DE); Koninklijke Philips Electronics N.V., 5621 BA Eindhoven (NL)
(72) Erfinder: Raets, Hubert c/o Philips Corp.Intel.Property GmbH, 52064, Aachen (DE); Boeke, Ulrich c/o Philips Corp.Intel.Property GmbH, 52064, Aachen (DE); Hente, Dirk c/o Philips Corp.Intel.Property GmbH H, 52064, Aachen (DE)
(74) Vertreter: Volmer, Georg

(56) Entgegenhaltungen:
- US-A- 4 628 426
- US-A- 5 777 859
- US-A- 6 018 467
- AGRAWAL J P ET AL: "Improving the dynamic and static cross regulation in multi-output resonant converters" PROCEEDINGS OF THE ANNUAL APPLIED POWER ELECTRONICS CONFERENCE AND EXPOSITION (APEC). SAN DIEGO, MAR. 7 - 11, 1993, NEW YORK, IEEE, US, Bd. CONF. 8, 7. März 1993 (1993-03-07), Seiten 65-70, XP010111242 ISBN: 0-7803-0983-9

## Beschreibung

Die Erfindung betrifft einen DC-DC-Konverter zur Umsetzung einer Eingangsgleichspannung in mehrere Ausgangsgleichspannungen.

Ein solcher DC-DC-Konverter ist aus der US 4,628,426 bekannt. Bei dem dort beschriebenen Konverter wird eine Eingangsgleichspannung mittels einer vier Schaltelemente aufweisenden Vollbrückenschaltung in ein (pulsförmiges) AC-Signal umgesetzt, welches der Primärwicklung eines Transformators zugeführt wird. Der Transformator hat zwei Sekundärwicklungen. Ein von der ersten Sekundärwicklung geliefertes AC-Signal wird gleichgerichtet und gefiltert, um eine erste Ausgangsgleichspannung zu erzeugen. Der zweiten Sekundärwicklung ist ein Resonanzkreiskondensator parallel geschaltet, der zusammen mit der Streuinduktivität der zweiten Sekundärwicklung einen Resonanzkreis bildet. Eine an dem Resonanzkreiskondensator abfallende Spannung wird gleichgerichtet und gefiltert, um so eine zweite Ausgangsgleichspannung zu erzeugen. Die beiden Ausgangsgleichspannungen werden durch eine entsprechende Ansteuerung der Schaltelemente der Vollbrückenschaltung und damit durch Anpassung des von der Vollbrückenschaltung gelieferten AC-Signals auf gewünschte Spannungswerte eingestellt. Die erste Ausgangsgleichspannung wird über eine Anpassung des Tastverhältnisses des AC-Signals eingestellt. Die zweite Ausgangsgleichspannung wird über eine Anpassung der Frequenz des AC-Signals eingestellt. Die beiden Ausgangsgleichspannungen sollen idealerweise unabhängig voneinander einstellbar sein.

Der Erfindung liegt die Aufgabe zugrunde, den Konverter der eingangs genannten Art so auszugestalten, dass die beim Betrieb des Konverters entstehenden Verluste möglichst klein sind.

Jai P. Agrawal et al., "Improving the dynamic and static cross regulation in multi-output resonant converters", Proceedings of the annual applied electronics conference and exposition (APEC), San Diego, Mar. 7-11, 1993, New York, IEEE, US, Bd. CONF. 8, 7. März 1993 (1993-03-07), Seiten 65-70, XP010111242 ISBN: 0-7803-0983-9 offenbart einen resonanten Konverter mit mehreren Ausgängen. Der Konverter weist ausgangsseitige Filter auf, welche derart ausgeführt sind, dass ein Fehler in der dynamischen Kreuzregulierung verringert wird.

US-A-4 628 426 offenbart einen Spannungskonverter zum Konvertieren eines ac Eingangssignals in ein starkes dc Ausgangssignal und weitere dc Versorgungsspannungen unter Zuhilfenahme eines Transformators mit Anzapfungen.

US-A-6 018 467 offenbart eine resonante Spannungsversorgung mit einem Stand-By-Modus mit niedriger Leistungsaufnahme der Spannungsversorgung. Eine erste sekundäre Wicklung eines Transformators liefert eine Hauptausgangsspannung und eine zweite sekundäre Wicklung des Transformators liefert eine Kontrollausgangsspannung, welche über einen Optokoppler an einen Kontroller weitergegeben werden kann.

Die Aufgabe wird dadurch gelöst, dass der eingangs genannte DC-DC-Konverter
- eine Schaltelemente aufweisende Schaltungsstufe zur Umwandlung der Eingangs- , gleichspannung in ein erstes AC-Signal,
- einen ersten Resonanzkreis zur Umsetzung des ersten AC-Signals in ein zweites AC-Signal, das zur Bildung einer ersten Ausgangsgleichspannung dient,
- einen zweiten Resonanzkreis zur Umsetzung des ersten AC-Signals in ein drittes AC-Signal, das zur Bildung einer zweiten Ausgangsgleichspannung dient und
- eine Steuerschaltung zur Einstellung verschiedener Frequenzbereiche für das erste AC-Signal aufweist.

Diese Konverterausgestaltung ist insbesondere vorteilhaft, wenn die zweite Ausgangsgleichspannung in einem Konverterbetriebszustand zur Lieferung einer Stand-By-Versorgungsgleichspannung dient, wobei die erste Ausgangsgleichspannung dann gegen Null geht. An der zweiten Ausgangsgleichspannung liegt in diesem Betriebszustand nur eine kleine Last an. Trotzdem ist bei dem erfindungsgemäßem Konverter ein sogenannter ZVS-Betrieb (Zero Voltage Switching) der Schaltelemente der das erste AC-Signal produzierenden Schaltungsstufe, die beispielsweise eine Halbbrücken- oder eine Vollbrückenschaltung aufweist, sichergestellt (zum Begriff ZVS-Betrieb siehe beispielsweise US 5.808.879), was bei der erwähnten US 4,628,426 nicht der Fall ist. Beim erfindungsgemäßen Konverter werden die Verluste im Stand-By-Betrieb reduziert. Der Schaltungsaufwand zur Realisierung eines Normalbetriebs und eines Stand-By-Betriebs ist möglichst gering gehalten. Eingestellt werden Normalbetrieb und Stand-By-Betrieb allein über eine geeignete Einstellung des Frequenzbereichs des ersten AC-Signals und einer entsprechenden Ansteuerung der Schaltelemente der genannten Schaltungsstufe. Normalbetrieb und Stand-By-Betrieb sind dabei unterschiedliche Frequenzbereiche zugeordnet. Der dem Stand-By-Betrieb zugeordnete Frequenzbereich enthält die Resonanzfrequenz des zweiten Resonanzkreises, was dazu führt, dass die erste Ausgangsgleichspannung gegenüber dem Normalbetrieb stark reduziert wird. Eine Konstantregelung der Ausgangsspannungen erfolgt über eine Feineinstellung der Frequenz im jeweiligen Frequenzbereich.

Vorteilhafte Ausgestaltungen des DC-DC-Konverters sind in den Unteransprüchen angegeben. Die Erfindung bezieht sich auch auf ein Netzteil mit dem erfindungsgemäßen DC-DC-Konverter.

Ausführungsbeispiele der Erfindung werden nachstehend anhand der Zeichnungen näher beschrieben. Es zeigen:
- Fig. 1: einen DC-DC-Konverter mit einer Halbbrückenschaltung;
- Fig 2: einen DC-DC-Konverter mit einer Vollbrückenschaltung;
- Fig. 3 und 4: verschiedene Ausführungsvarianten eines ersten Konverterresonanzkreises;
- Fig. 5 bis 12: verschiedene Schaltungen für einen zweiten Konverterresonanzkreis;
- Fig 13: ein Netzteil mit einem erfindungsgmiäßen DC-DC-Konverter;
- Fig. 14 und 15: Konvettaübetragungsfunktionen in Bezug auf zwei Konverterausgangsspannungen und
- Fig. 16: eine Schaltung zur Realisierung des Konverters ohne Transformator.

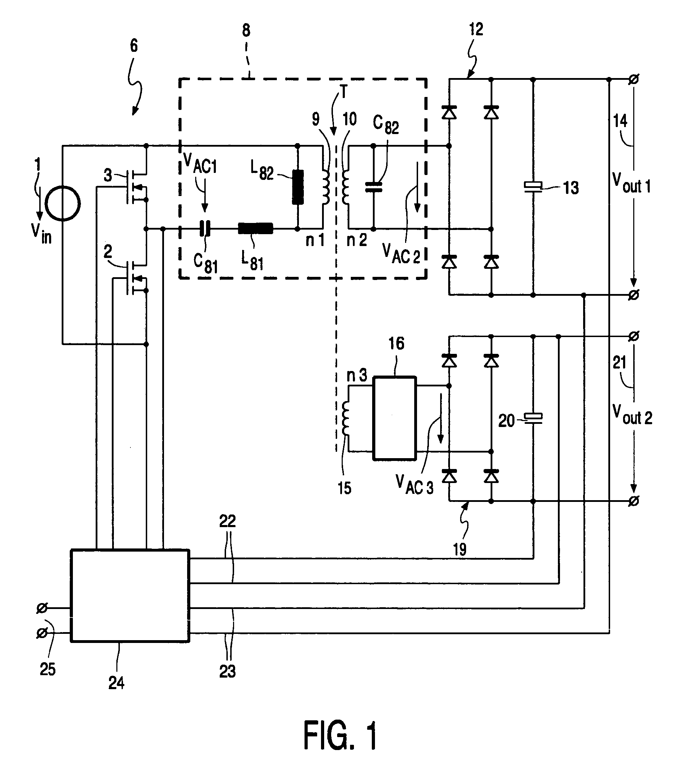

Der in Fig 1 gezeigte DC-DC-Konverter setzt eine Eingangsgleichspannung 1 (Vᵢₙ) in eine erste Ausgangsgleichspannung 14 (Vₒᵤₜ₁) und eine zweite Ausgangsgleichspannung 21 (Vₒᵤₜ₂) um. Eine Schaltungsstufe 6 setzt die Eingangsgleichspannung 1 in ein erstes AC-Signal V_{AC1} um. Hierzu enthält die Schaltungsstufe 6 eine Halbbrückenschaltung mit zwei Schaltelementen 2 und 3, die hier als MOSFET-Transistoren ausgeführt sind. Das AC-Signal V_{AC1} wird einem ersten Resonanzkreis 8 zugeführt, der das AC-Signal V_{AC1} in ein zweites AC-Signal V_{AC2} umsetzt. Das Signal V_{AC2} wird mittels einer Gleichrichterbrückenschaltung 12 gleichgerichtet und mittels eines Glättungkondensators 13 gefiltert. Am Glättungskondensator 13 wird schließlich die erste Ausgangsspannung 14 abgegriffen.

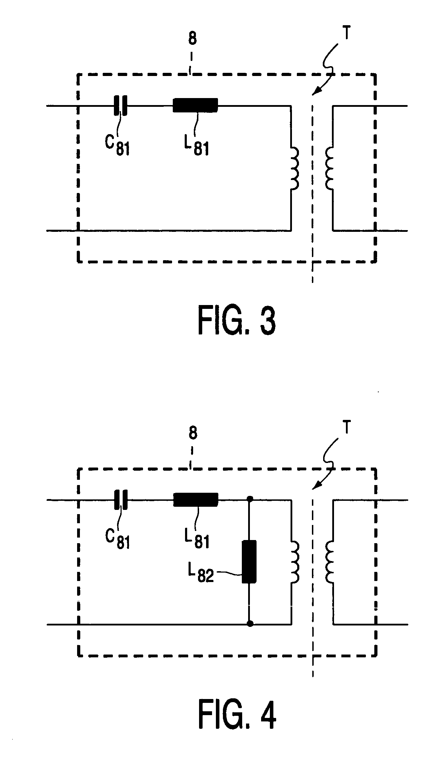

Der Resonanzkreis 8 hat in Fig. 1 die folgende Struktur: In Reihe zum Eingang des Resonanzkreises 8 liegt eine Reihenschaltung aus einem kapazitiven Element C₈₁ und einem induktiven Element L₈₁ liegt; zu der Reihenschaltung ist ein induktives Element L₈₂ parallel geschaltet, das parallel zur Primärwicklung 9 (Windungszahl n1) eines Transformators T liegt, der zwei Sekundärwicklungen aufweist, von denen die erste zum Resonanzkreis 8 gehört. Parallel zur ersten Sekundärwicklung 10 (Windungszahl n2) des Transformators T ist ein kapazitives Element C₈₂ geschaltet, das wiederum parallel zum Ausgang des Resonanzkreises 8 liegt und an dem die Spannung V_{AC2} abfällt. Weitere Ausführungsvarianten des Resonanzkreises 8 zeigen die Figuren 3 und 4. In Fig. 3 hat der Resonanzkreis 8 lediglich ein kapazitives und ein induktives Element. In Fig. 4 hat der Resonanzkreis 8 ein kapazitives und zwei induktive Elemente.

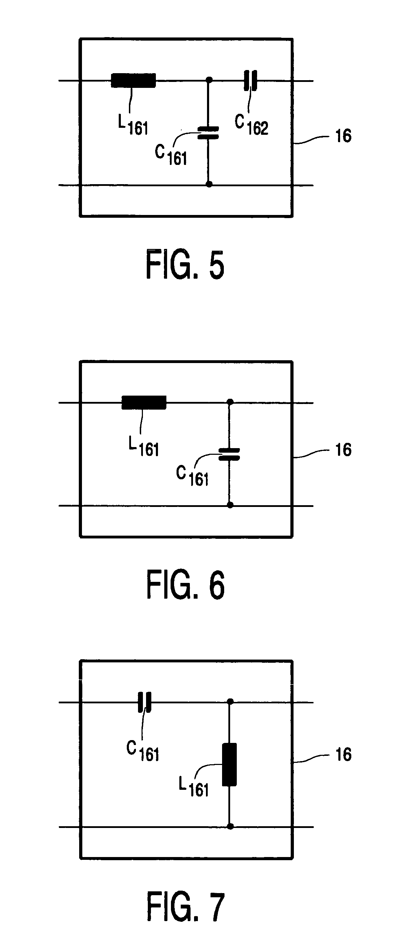

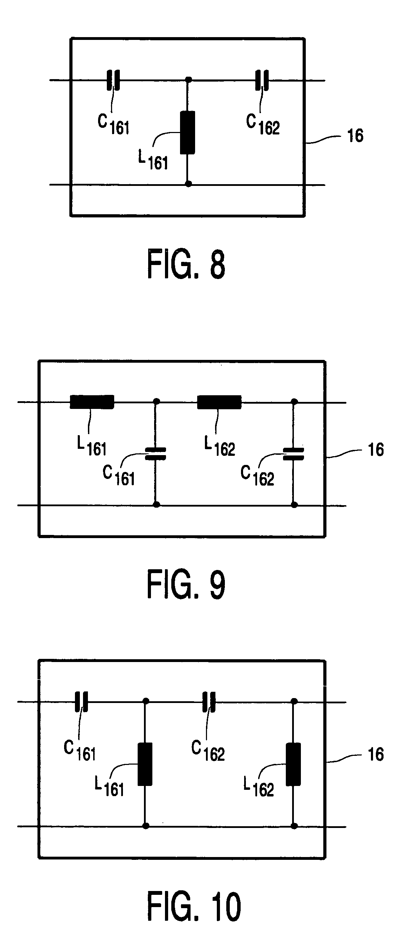

Der DC-DC Konverter nach Fig. 1 enthält weiterhin einen zweiten Resonanzkreis 16, dem die an einer zweiten Sekundärwicklung 15 (Windungszahl n3) des Transformators T abfallende Spannung zugeführt wird und der insbesondere einen Schaltkreis wie in Fig. 5 mit einem induktiven Element L₁₆₁ und zwei kapazitiven Elementen C₁₆₁ und C₁₆₂ enthält. Dabei ist ein Anschluss des kapazitiven Elements C₁₆₁ sowohl mit einem der Resonanzkreiseingangsanschlüsse als auch mit einem der Resonanzkreisausgangsanschlüsse verbunden. Der andere Anschluss des kapazitiven Elements C₁₆₁ ist mit der Verbindung zwischen dem induktiven Element L₁₆₁ und dem kapazitiven Element C₁₆₂ verbunden, deren beiden anderen Anschlüsse mit dem anderen Resonanzkreiseingangsanschluss bzw. dem anderen Resonanzkreisausgangsanschluss verbunden sind Der Resonanzkreis 16 setzt eine an der Wicklung 15 abfallende Spannung in eine Spannung V_{AC3} (drittes AC-Signal) um, die von einer Brückengieichhchterschaltung 19 gleichgerichtet und mittels eines Glättungskondensators 20 gefiltert wird. Am Glättungskondensator 20 ist eine zweite Ausgangsgleichspannung 21 (Vₒᵤₜ₂) abgreifbar. In der Variante des Resonanzkreises 16 nach Fig 8 sind lediglich die Elemente L₁₆₁ und C₁₆₁ gegenüber der Variante nach Fig 5 vertauscht.

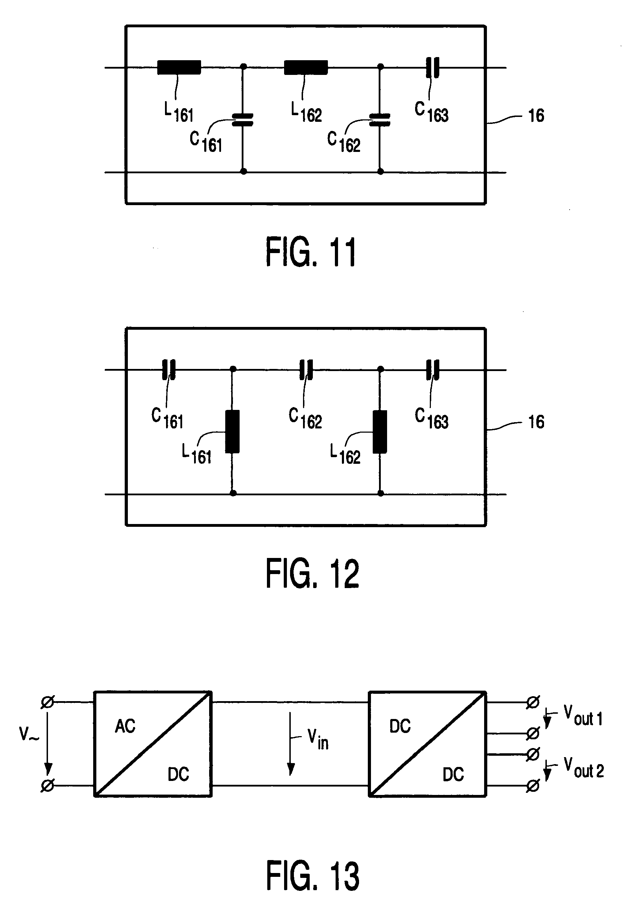

Weitere Ausgestaltungsmöglichkeiten für den Resonanzkreis 16 zeigen die Figuren 6 bis 7 und 9 bis 12. Fig. 6 und 7 zeigen Resonanzkreisvarianten mit einem kapazitiven und einem induktiven Element. Fig. 9 und 10 zeigen Resonanzkreisvarianten mit zwei kapazitiven und zwei induktiven Elementen. Fig. 11 zeigt eine Resonanzkreisvanante mit drei kapazitiven und zwei induktiven Elementen und Fig. 12 zeigt schließlich eine Resonanzkreisvariante mit drei kapazitiven und zwei induktiven Elementen.
Eine Steuerschaltung 24 liefert die Steuersignale für die Schaltelemente 2 und 3 der Halbbrücke 6. Sie wertet die Ausgangsspannungen 14 und 21 aus und regelt in Abhängigkeit von den gemessenen Ausgangsspannungswerten die Schaltfrequenz f der Schaltelemente 2 und 3 und damit die Frequenz des AC-Signals V_{AC1}. Über einen Digitaleingang 25 wird der Steuerschaltung 24 ein (1-Bit-) Steuersignal zugeführt, mit dem (zwei) verschiedene Betriebszustände des DC-DC-Konverters einstellbar sind, hier der Normalbetrieb und der Stand-By-Betrieb. Dies hat den Vorteil, dass der für das Hin-und Her-Schalten verwendete Schalter (nicht dargestellt) nicht für eine hohe Netzspannung ausgelegt sein muss, sondern lediglich für ein für Digitalschaltungen übliches kleines Spannungsniveau (z. B. fünf Volt).

Durch eine Regelung der Frequenz f werden die Ausgangsspannungen 14 und 21 mit üblichen Regelungsmechanismen auf vorgebbare Sollwerte konstant geregelt, um beispielsweise Schwankungen einer Netzspannung oder Lastschwankungen an den Konverterausgängen auszugleichen. Dazu werden die Ausgangsspannungen 14 und 21 über Rückkopplungszweige 22 und 23 der Steuerschaltung 24 zugeführt.

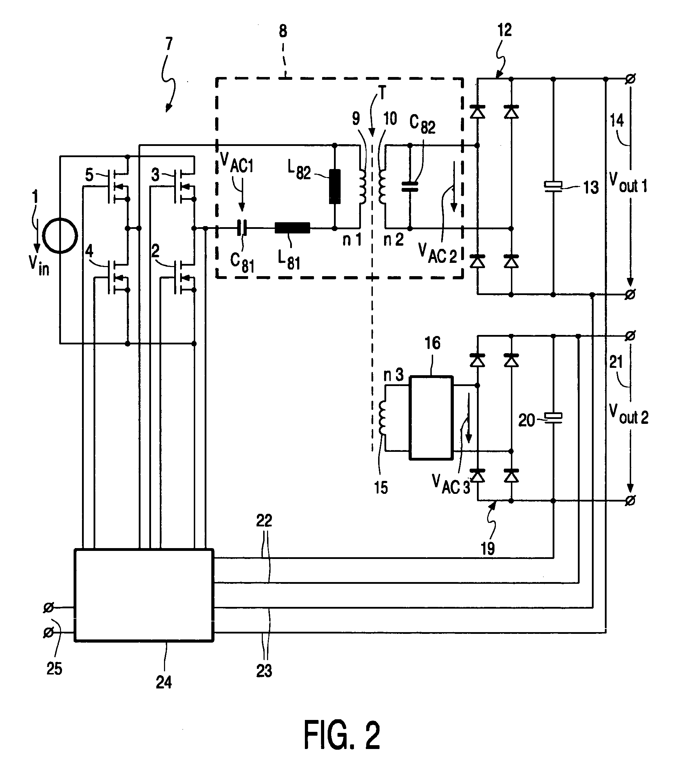

Fig. 2 zeigt eine weitere Ausgestaltungmöglichkeit für den DC-DC-Konverter. Gegenüber dem Konverter gemäß Fig. 1 ist die Halbbrücke 6 durch eine Vollbrücke 7 mit vier Schaltelementen 2,3,4 und 5 ersetzt.

Wird die Bauform des Transformators T geeignet gewählt, sind die Resonanzkreiselemente der Resonanzkreise 8 und 16 wenigstens teilweise schon durch den Transformator T selbst realisiert; so können beispielsweise die induktiven Elemente L₈₁ und L₁₆ ganz oder teilweise durch die entsprechenden Streuinduktivitäten des Transformators T realisiert sein. Der Transformator dient zur Potentialtrennung zwischen den AC-Signalen V_{AC1}, V_{AC2} und V_{AC3}.

Fig. 13 zeigt ein Netzteil mit dem erfindungsgemäßen DC-DC-Konverter, dem hier ein AC-DC-Konverter vorgeschaltet ist, der eine Netzwechselspannung V_ in die dem DC-DC-Konverter zugeführte Eingangsgleichspannung Vᵢₙ umwandelt.

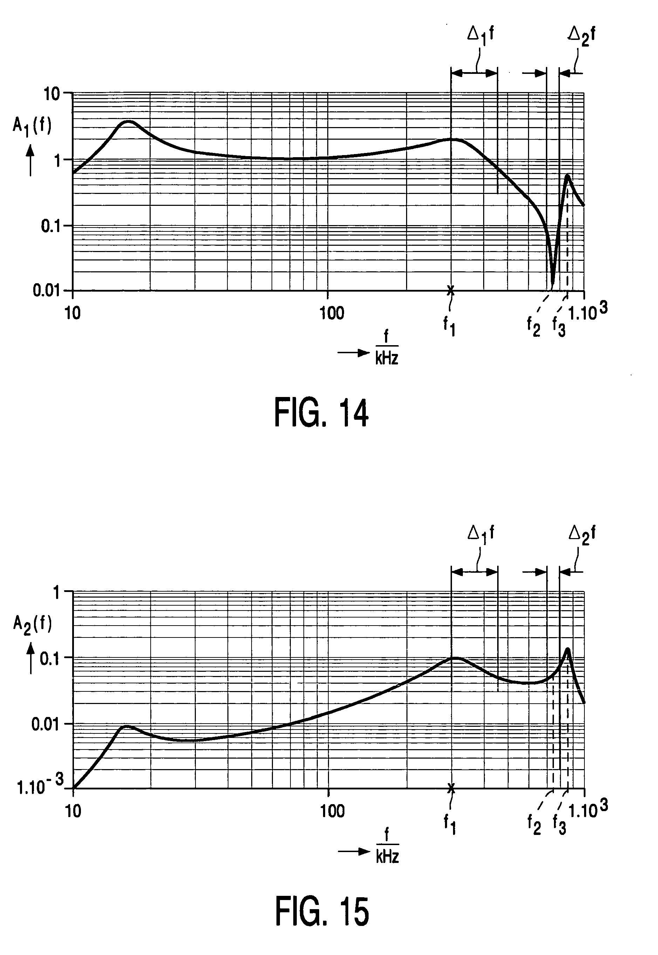

Fig. 14 und 15 zeigen Übertragungsfunktionen A₁(f) = Vₒᵤₜ₁/Vᵢₙ und A₂(f) = Vₒᵤₜ₂/Vᵢₙ des erfindungsgemäßen DC-DC-Konverters in Abhängigkeit von der Frequenz f des AC-Signals V_{AC1} für einen Resonanzkreis 8 wie in Fig 1 und einem Resonanzkreis 16 wie in Fig. 5 dargestellt. Frequenzbereiche Δ₁f und Δ₂f kennzeichnen die Frequenzen, die für zwei Betriebsarten des DC-DC-Konverters vorgesehen sind Die Einstellung dieser Betriebsarten wird durch Anlegen eines Digitalsignals (hier durch Anlegen eines 1-Bit-Digitalsignals) gesteuert. Die Lage und Breite der Frequenzbereiche wird in Abhängigkeit von den gewünschten Betriebsarten angepasst, wobei insbesondere die Lage der Resonanzfrequenzen der Resonanzkreise 8 und 16 berücksichtigt wird. Hier entspricht der Frequenzbereich Δ₁f einem Normalbetrieb-Stromversorgungsmodus des DC-DC-Konverters, in dem der Konverter zur Stromversorgung eines eingeschalteten und (nicht näher dargestellten) im Normalbetrieb befindlichen elektrischen Geräts (z. B. aus dem Bereich der Unterhaltungselektronik) über die Ausgangsgleichspannung Vₒᵤₜ₁ dient. Der Frequenzbereich Δ₂f wird für einen Stand-By-Betneb-Stromversorgungsmodus des DC-DC-Konverters verwendet, in dem der Konverter zur Stand-By-Stromversorgung des elektrischen Geräts dient, wobei ein Stand-By-Modul des elektrischen Gerät mit einer kleinen Ausgangsgleichspannung Vₒᵤₜ₂ versorgt wird und wobei die Ausgangsgleichspannung Vₒᵤₜ₁ stark reduziert ist und hier nahezu zu Null wird. Im vorliegenden Fall wird die Ausgangsgleichspannung Vₒᵤₜ₂ in beiden Stromversorgungsmodi in ungefähr demgleichen Spannungsbereich gehalten, d.h. hier erfolgt eine Stromversorgung eines Stand-By-Moduls eines elektrischen Geräts auch im Nonnalbetriebs-Stromvemrgungeiodus, Die Untergrenze des Frequenzbereichs Δ₁f liegt bei einer Frequenz, die größer oder gleich der maximalen Resonanzfrequenz f₁ des ersten Resonanzkreises 8 ist. In Fig 14 und 15 ist die Untergrenze des Frequenzbereichs Δ₁f gleich der Resonanzfrequenz f₁. Zu größer werdenden Frequenzen nimmt der Betrag der Übertragungsfunktion des Resonanzkreises 8 ab, so dass sichergestellt ist, dass die Halbbrücke 6 bzw. die Vollbrücke 7 sowohl im Normalbetriebs- als auch im Stand-By-Betriebs-Stromversorgungsmodus induktiv belastet werden. Diese induktive Belastung ermöglicht zusammen mit parallel zu den Schaltelementen der Halbbrücke 6 bzw. der Vollbrücke 7 liegenden nicht dargestellten Kapazitäten (diese können durch parallel zu den Schaltelementen liegende Kondensatoren und/oder parasitäre Kapazitäten der Schaltelemente sein) einen ZVS-Betrieb der Schaltelemente 2 und 3 bzw. 2,3,4 und 5 in allen Stiomversorgungsmodi.

Die Frequenz f₂ gibt die Resonanzfrequenz des Resonanzkreises 16 an. Ausgehend von der Frequenz f₁ durchschreitet die Funktion A₁(f) ein Minimum und nimmt aufgrund der Eingangsimpedanz des Resonanzkreises 16 bis hin zu einem Maximum bei der Frequenz f₃ wieder zu. Die Konverterschaltung ist nun so dimensioniert, dass der Frequenzbereich Δ₂f so zwischen dem genannten Minimum von A₁(f) und der Frequenz f₃ liegt, dass die zugehörigen Wertebereiche von A₂(f) in den Frequenzbereichen Δ₁f und Δ₂f gleich oder ungefähr sind, so dass die Stromversorgung eines Stand-By-Moduls mittels der AusgangsSpannung Vₒᵤₜ₂ sowohl im Normalbetriebs-Stromversorgungsmodus als auch im Stand-By-Betriebs-Stromversorgungsmodus sichergestellt ist. Weiterhin bezeichnet f₂ die Frequenz aus dem Frequenzbereich Δ₂f, bei der A₁(f) ein Minimum erreicht. Die Frequenz f₂ wird vorzugsweise ungefähr in die Mitte des Frequenzbereichs Δ₂f gelegt.

Der Frequenzbereich Δ₂f verbreitert sich mit einer erhöhten Anzahl induktiver/kapazitiver Elemente des Resonanzkreises 16 und ist bei den dargestellten Ausführungsbeispielen demgemäss bei den Ausfühnmgsvarianten gemäß Fig 11 und 12 am breitesten. Ein verbreiteter Frequenzbereich Δ₂f hat den Vorteil, dass für die verwendeten Konverterbauelemente geringe Toleranzwerte angesetzt werden können. Die Verwendung einer kleineren Anzahl induktiver/kapazitiver Elemente für den Resonanzkreis 16 führt zu entsprechend reduzierten Kosten.

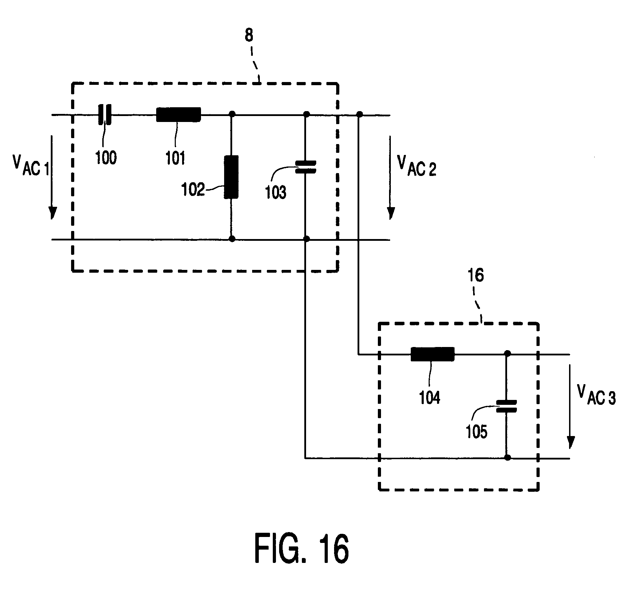

Fig. 16 zeigt eine Schaltungsanordnung für den erfindungsgemäßen DC-DC-Konverter, bei der der erste Resonanzkreis 8 und der zweite Resonanzkreis 16 ohne Verwendung eines Transformators miteinander gekoppelt sind. Dem Resonanzkreis 8 wird eingangsseitig das erste AC-Signal V_{AC1} zugeführt; ausgangsseitig liefert der Resonanzkreis 8 das zweite AC-Signal V_{AC2}. Der zweite Resonanzkreis 16 liefert auch hier das dritte AC-Signal V_{AC3}. Der erste Resonanzkreis weist in dieser Ausführungsvariante zwei kapazitive und zwei induktive Elemente auf. An einem Eingangsanschluss des Resonanzkreises 8 liegt eine Reihenschaltung aus einem kapazitiven Element 100 und einem induktiven Element 101. Zwischen dem gegenüberliegenden Anschluss dieser Reihenschaltung und dem anderen Eingangsanschluss des Resonanzkreises 8 liegt eine Parallelschaltung aus einem induktiven Element 102 und einem kapazitiven Element 103, an der zugleich das AC-Signal V_{AC2} abgreifbar ist. Zwischen den ausgangsseitigen Anschlüssen des Resonanzkreises 8 liegt weiterhin eine Reihenschaltung aus einem induktiven Element 104 und einem kapazitiven Element 105. Die beiden Elemente 104 und 105 bilden den zweiten Resonanzkreis 16. Am kapazitiven Element 105 ist das dritte AC-Signal V_{AC3} abgreifbar. Im Bereich der Resonanzfrequenz des zweiten Resonanzkreises 16 wirkt die Reihenschaltung der Elemente 104 und 105 wechseispannungsmäßig wie ein Kurzschluss, so dass das AC-Signal V_{AC2} gegen Null geht. Dies wird für den Stand-By-Betriebs-Stromversorgungmodus ausgenutzt (in der Umgebung der Resonanzfrequenz liegt ein entsprechender Frequenzbereich Δ₂f. Im Normalbetriebs-Stromversorgungsmodus sind beide AC-Signale auf die geeigneten Werte geregelt (entspricht wiederum einem Frequenzbereich (Δ₁f). Die obigen Erläuterungen sind auf diese Ausführungsvariante entsprechend anwendbar.

Die Halbbrückenschaltung 6 gemäß Fig 1 bzw. die Halbbrückenschaltung 7 werden vorzugsweise im Stand-By-Betriebs-Stromversorgungsmodus in einem sogenannten "Burst-Modus" betrieben. Das bedeutet, das aufeinanderfolgende Zeiträume tᵢ vorgesehen sind, die jeweils in zwei Zeitabschnitte tᵢ₁ und tᵢ₂ unterteilt sind. Im jeweiligen Zeitabschnitt tᵢ₁ erfolgt jeweils ein Ein- und Ausschalten der Schaltelemente 2 und 3 bzw. 2 bis 5, um das erste AC-Signal V_{AC1} zu erzeugen. Imjeweiligen Zeitabschnitt tᵢ₂ sind alle Schalter ausgeschaltet, so dass das AC-Signal V_{AC1} für diesen Zeitabschnitt den Wert Null hat; in den Zeitabschnitten tᵢ₂ wird die Energie zur Aufrechterhaltung der Ausgangsspannung Vₒᵤₜ₂ vom Kondensator 20 geliefert. Die Zeiträume tᵢ haben vorzugsweise einen Wert von ungefähr 50 µs, was einer Frequenz von 20 kHz entspricht, die ja normalerweise nicht mehr hörbar sind.

Das Tastverhältnis (duty cycle), das gleich dem Verhältnis tᵢ₁ /tᵢ₂ ist, wird vorzugsweise kleiner als 50% gewählt. Ein Betrieb der Schaltelemente im Burst-Modus reduziert die Gesamtverluste des DC-DC-Konverters zusätzlich.

Die Erfindung betrifft auch DC-DC-Konverter, die mehr als zwei Ausgangsspannungen liefern. Die notwendigen Maßnahmen liegen bei Kenntnis der Erfindung und der schon bekannten DC-DC-Konverter im Rahmen fachmännischen Handelns und werden nicht mehr näher erläutert. Titel

## Patentansprüche

1. DC-DC-Konverter zur Umsetzung einer Eingangsgleichspannung (1) in mehrere Ausgangsgleichspannungen (14, 21) mit
- einer Schaltelemente (2, 3, 4, 5) aufweisenden Schaltungsstufe (6, 7) zur Umwandlung der Eingangsgleichspannung (1) in ein erstes AC-Signal (V_{AC1}),
- einem ersten Resonanzkreis (8) zur Umsetzung des ersten AC-Signals (V_{AC1}) in ein zweites AC-Signal (V_{AC2}), das zur Bildung einer ersten Ausgangsgleichspannung (14) dient,
- einem zweiten Resonanzkreis (16) zur Umsetzung des ersten AC-Signals (V_{AC1}) in ein drittes AC-Signal (V_{AC3}), das zur Bildung einer zweiten Ausgangsgleichspannung (21) dient,
- mit einer Steuerschaltung (24) zur Einstellung verschiedener Frequenzbereiche (Δ₁f, Δ₂f) für das erste AC-Signal,
**dadurch gekennzeichnet,**
**dass** bei Frequenzen (f) aus dem ersten Frequenzbereich (Δ₁f) die erste Ausgangsgleichspannung (14) in einem Spannungsbereich liegt, der betragsmäßig größere Spannungen aufweist als ein anderer Spannungsbereich, in dem die erste Ausgangsspannung (14) bei Frequenzen (f) aus dem zweiten Frequenzbereich (Δ₂f) liegt und
**dass** die zweite Ausgangsgleichspannung (21) sowohl bei Frequenzen (f) aus dem ersten (Δ₁f) als auch aus dem zweiten Frequenzbereich (Δ₂f) näherungsweise im gleichen Spannungsbereich liegt.

2. DC-DC-Konverter nach Anspruch 1,
**dadurch gekennzeichnet,**
**dass** ein eine Potentialtrennung zwischen erstem, zweitem und drittem AC-Signal bewirkender Transformator (T) vorgesehen ist, der eine dem ersten Resonanzkreis (8) zugeordnete Primärwicklung (9), eine dem ersten Resonanzkreis (8) zugeordnete erste Sekundärwicklung (10) und eine dem zweiten Resonanzkreis (16) zugeordnete zweite Sekundärwicklung (15) aufweist.

3. DC-DC-Kvnverter nach Anspruch 2,
**dadurch gekennzeichnet,**
**dass** der erste Frequenzbereich (Δ₁f) einem Normalbetrieb-Stromversorgungsmodus und der zweite Frequenzbereich (Δ₂f) einem Stand-By-Betrieb-Stromversorgungsmodus entspricht.

4. DC-DC-Konverter nach einem der Ansprüche 1 bis 3,
**dadurch gekennzeichnet,**
**dass** die Schaltungsstufe (6, 7) zur Umwandlung der Eingangsgleichspannung (1) in das erste AC-Signal (V_{AC1}) eine zwei Schaltelemente (2, 3) aufweisende Halbbrückenschaltung oder eine vier Schaltelemente (2, 3, 4, 5) aufweisende Vollbrückenschaltung enthält.

5. DC-DC-Konverter nach Anspruch 4,
**dadurch gekennzeichnet,**
**dass** die Halb- oder Vollbrückenschaltung (6, 7) zum Betrieb in einem Burst-Modus vorgesehen ist.

6. DC-DGKonverter nach Anspruch 4 oder 5,
**dadurch gekennzeichnet,**
**dass** eine induktive ausgangsseitige Belastung der Halbbrücken- oder Vollbrückenschaltung (6, 7) vorgesehen ist.

7. DC-DC-Konverter nach einem der Ansprüche 1 bis 6,
**dadurch gekennzeichnet,**
**dass** eine Regelung der Ausgangsgleichspannungen (14,21) auf vorgebbare Sollwerte durch Anpassung der Frequenz des ersten AC-Signals (V_{AC1}) vorgesehen ist.

8. DC-DC-Konverter nach einem der Ansprüche 1 bis 7,
**dadurch gekennzeichnet,**
**dass** die Steuerschaltung (24) zur Einstellung des Konverters auf einen der Frequenzbereiche (Δ₁f, Δ₂f) in Abhängigkeit von einem ihr zugeführten Digitalsignal (25) vorgesehen ist.

9. DC-DC-Konverter nach einem der Ansprüche 1 bis 8,
**dadurch gekennzeichnet,**
**dass** der erste Resonanzkreis (8) zwei kapazitive Elemente (C₈₁, C₈₂) und zwei induktive Elemente (L₈₁, L₈₂) enthält und
**dass** der zweite Resonanzkreis (16) zwei kapazitive Elemente (C₁₆₁, C₁₆₂) und ein induktives Element (L₁₆₁) enthält.

10. Netzteil mit einem DC-DC-Konverter nach einem der Ansprüche 1 bis 9.

## Claims

1. A DC-DC converter for converting a DC input voltage (1) into a plurality of DC output voltages (14, 21), including:
- a circuit stage (6, 7) including switching elements (2, 3, 4, 5) for converting the DC input voltage (1) into a first AC signal (V_{AC1}),
- a first resonant circuit (8) for converting the first AC signal (V_{AC1}) into a second AC signal (V_{AC2}), which is used for forming a first DC output voltage (14),
- a second resonant circuit (16) for converting the first AC signal (V_{AC1}) into a third AC signal (V_{AC3}), which is used for forming a second DC output voltage (21) and a control circuit (24) for setting various frequency ranges (Δ₁f, Δ₂f) for the first AC signal,
**characterized in that** with frequencies (f) from the first frequency range (Δ₁f) the first DC output voltage (14) is situated in a voltage range that has larger voltage values than another voltage range in which the first output voltage (14) with frequencies (f) from the second frequency range (Δ₂f) is situated and **in that** the second DC output voltage (21) is situated in substantially the same voltage range both with frequencies (f) from the first frequency range (Δ₁f) and from the second frequency range (Δ₂f) lies in substantially the same voltage range.

2. A DC-DC-converter as claimed in claim 1, **characterized in that** a transformer (T) is provided realizing a separation of potential between a first, a second and a third AC signal, which transformer has a primary winding (9) assigned to the first resonant circuit (8), a first secondary winding (10) assigned to the first resonant circuit (8) and a second secondary winding (15) assigned to the second resonant circuit (16).

3. A DC-DC converter as claimed in claim 2, **characterized in that** the first frequency range (Δ₁f) corresponds to a power supply mode of normal operation and the second frequency range (Δ₂f) corresponds to a standby power supply mode.

4. A DC-DC converter as claimed in any one of the claims 1 to 3, **characterized in that** the circuit stage (6, 7) for converting the DC input voltage (1) into the first AC signal (V_{AC1}) has a half-bridge circuit including two switching elements (2, 3) or a full-bridge circuit including four switching elements (2, 3, 4, 5).

5. A DC-DC converter as claimed in claim 4, **characterized in that** the half-bridge or full-bridge circuit (6, 7) is used for operation in a burst mode.

6. A DC-DC converter as claimed in claim 4 or 5, **characterized in that** an inductive output load of the half-bridge or full-bridge circuit (6, 7) is provided.

7. A DC-DC converter as claimed in any one of the claims 1 to 6, **characterized in that** the DC output voltages (14, 21) are controlled to predefinable set values by adapting the frequency of the first AC signal (V_{AC1}).

8. A DC-DC converter as claimed in any one of the claims 1 to 7, **characterized in that** the control circuit (24) is used for setting the converter to one of the frequency ranges (Δ₁f, Δ₂f) in dependence on a digital signal (25) applied to the control circuit.

9. A DC-DC converter as claimed in any one of the claims 1 to 8, **characterized in that** the first resonant circuit (8) includes two capacitive elements (C₈₁, C₈₂) and two inductive elements (L₈₁, L₈₂) and **in that** the second resonant circuit (16) includes two capacitive elements (C₁₆₁, C₁₆₂) and one inductive element (L₁₆₁).

10. A power supply with a DC-DC converter as claimed in any one of the claims 1 to 9.

## Revendications

1. Convertisseur CC-CC pour la conversion d'une tension continue d'entrée (1) en plusieurs tensions continues de sortie (14, 21) avec
- un étage de circuit (6, 7) présentant des éléments de commutation (2, 3, 4, 5) pour la conversion de la tension continue d'entrée (1) en un premier signal CA (V_{CA1});
- un premier circuit de résonance (8) pour la conversion du premier signal CA (V_{CA1}) en un deuxième signal CA(V_{CA2}) qui sert à la formation d'une première tension continue de sortie (14),
- un deuxième circuit de résonance (16) pour la conversion du premier signal CA (V_{CA1}) en un troisième signal CA(V_{CA3}) qui sert à la formation d'une deuxième tension continue de sortie (21) ;
- avec un circuit de commande (24) pour le réglage de différentes gammes de fréquences (Δ₁f, Δ₂f) pour le premier signal CA,
**caractérisé en ce**
**qu'**à des fréquences (f) de la première gamme de fréquences (Δ_{1f}), la première tension continue de sortie (14) se situe dans une gamme de tensions qui présente, sur le plan de la valeur, des tensions plus grandes qu'une autre gamme de tensions dans laquelle la première tension de sortie (14) se situe à des fréquences (f) de la deuxième gamme de fréquences (Δ_{2f}) et
**que** la deuxième tension continue de sortie (21) se situe approximativement dans la même gamme de tensions à des fréquences (f) des première (Δ₁f) et deuxième (Δ₂f) gammes de fréquences.

2. Convertisseur CC-CC selon la revendication 1,
**caractérisé en ce**
**qu'**un transformateur (T) provoquant une séparation de potentiel entre les premier, deuxième et troisième signaux CA est prévu et présente un enroulement primaire (9) attribué au premier circuit de résonance (8), un premier enroulement secondaire (10) attribué au premier circuit de résonance (8) et un deuxième enroulement secondaire (15) attribué au deuxième circuit de résonance (16).

3. Convertisseur CC-CC selon la revendication 2,
**caractérisé en ce**
**que** la première gamme de fréquences (Δ₁f) correspond à un mode d'alimentation électrique normal et la deuxième gamme de fréquences (Δ₂f) à un mode d'alimentation électrique en stand-by.

4. Convertisseur CC-CC selon l'une des revendications 1 à 3,
**caractérisé en ce**
**que** l'étage de circuit (6, 7) contient un circuit en demi-pont présentant deux éléments de commutation (2, 3) ou un circuit en pont intégral présentant quatre éléments de commutation (2, 3, 4, 5) pour la conversion de la tension continue d'entrée (1) en un premier signal CA (V_{CA1}).

5. Convertisseur CC-CC selon la revendication 4
**caractérisé en ce**
**que** le circuit en demi-pont ou en pont intégral (6, 7) est prévu pour le fonctionnement en mode burst.

6. Convertisseur CC-CC selon l'une des revendications 4 ou 5,
**caractérisé en ce**
**qu'**une charge inductive côté sortie du circuit en demi-pont ou en pont intégral (6, 7) est prévue.

7. Convertisseur CC-CC selon l'une des revendications 1 à 6, **caractérisé en ce qu'**un réglage des tensions continues de sortie (14, 21) est prévu sur des valeurs de consigne à déterminer préalablement par adaptation de la fréquence du premier signal CA (V_{CA1}).

8. Convertisseur CC-CC selon l'une des revendications 1 à 7
**caractérisé en ce**
**que** le circuit de commande (24) est prévu pour le réglage du convertisseur sur l'une des gammes de fréquences (Δ₁f, Δ₂f) en fonction d'un signal numérique (25) qui lui est amené.

9. Convertisseur CC-CC selon l'une des revendications 1 à 8,
**caractérisé en ce**
**que** le premier circuit de résonance (8) contient deux éléments capacitifs (C₈₁, C₈₂) et deux élément inductifs (L₈₁, L₈₂) et
**que** le deuxième circuit de résonance (16) contient deux éléments capacitifs (C₁₆₁, C₁₆₂) et un élément inductif (L₁₆₁).

10. Partie de réseau avec un convertisseur CC-CC selon l'une des revendications 1 à 9.
